# EUROPÄISCHE PATENTANMELDUNG

(11) **EP 3 666 876 A1**
(43) Veröffentlichungstag der Anmeldung: **17.06.2020**
(21) Anmeldenummer: 19213506.9
(22) Anmeldetag: 04.12.2019
(51) Int. Cl.: C12G 3/00, C12G 3/06, C12H 6/02, C12H 3/00

(54) **VERWENDUNG EINES GINÄHNLICHEN HYDROLATS**

(30) Priorität: 04.12.2018 DE 102018130896
(71) Anmelder: Stübinger, Stefan, 4102 Binningen (CH)
(72) Erfinder: Stübinger, Stefan, 4102 Binningen (CH)
(74) Vertreter: Dantz, Jan Henning

(57) **Zusammenfassung**

Eine Verwendung eines ginähnliches Hydrolats, hergestellt durch eine Wasserdampfdestillation von Wacholderbeeren, als Getränk in Form eines Genussmittels, wobei das ginähnliche Hydrolat eine Alkoholkonzentration von 10 bis 25 Vol.% an Alkohol aufweist.

## Beschreibung

Die vorliegende Erfindung betrifft eine Verwendung eines ginähnlichen Hydrolats.

Die Herstellung von Gin ist bereits seit vielen Jahrhunderten bekannt. Es haben sich mehrere Verfahren zu dessen Herstellung durchgesetzt, so u.a. das Perkulationsverfahren, welches sich u.a. in dem sogenannten Pot-Still-Verfahren wiederfindet. Typischerweise hat der gewonnene Gin einen Alkoholgehalt von mehr als 40 Vol.% Alkohol. Ein Gin muss dabei nach Vorschriften in der EU und der Schweiz mehr als 37,5 Vol.% Alkohol enthalten.

Problematisch daran ist, dass bereits der Genuss von Gin in geringem Umfang zur Fahruntüchtigkeit führen kann. Selbst ein Mischgetränk aus Gin und Tonic Water kann nur in sehr begrenztem Maße genossen werden. Hinzu kommt das Gin besonders in den Sommermonaten als erfrischendes Getränk genutzt wird.

Weiterhin sind Wacholder-Hydrolate bekannt. Diese werden meist als Kosmetikmittel oder Haarwasser eingesetzt. Alternativ werden die Wacholder-Hydrolate auch zu Rheumasalben weiterverarbeitet.

Ausgehend von den vorgenannten Anwendungen ist es die Aufgabe der vorliegenden Erfindung ein gin-ähnliches Hydrolat, quasi eine Gin-light-Variante, als Getränk in Form eines Genussmittels bereitzustellen, welches gegenüber herkömmlichen Gin einen wesentlich geringeren Alkoholgehalt aufweist.

Erfindungsgemäß erfolgt dies durch die Verwendung eines ginähnliches Hydrolats, hergestellt durch eine Wasserdampfdestillation von Wacholderbeeren und ggf. weiteren Botanicals, als Getränk in Form eines Genussmittels, wobei das ginähnliche Hydrolat eine Alkoholkonzentration von 10 bis 25 Vol.% an Alkohol aufweist.

Das ginähnliche Hydrolat kann als Getränk pur eingenommen werden oder aber als Mischgetränk in Kombination mit anderen chininhaltigen meist kohlesäurehaltigen Erfrischungsgetränken. Meist wird hierzu Tonic-Water genutzt.

Die Alkoholkonzentration von 10 Vol.% oder darüber stabilisiert das Hydrolat, so dass das Getränk lagerfähig ist. Dies ist eine wichtige Eigenschaft für die Getränkeindustrie.

Weiterhin beträgt die Alkoholkonzentration 25 Vol.% oder darunter, so dass der Konsument eine deutlich höhere Menge des Getränks als bei Genuss von reinem Gin zu sich nehmen kann. Dies ist zumeist auch über einen längeren Zeitraum verteilt, so dass der Körper auch die Möglichkeit hat, einen Teil der aufgenommenen Menge zwischenzeitlich abzubauen.

Die vorgenannte Gin-light-Variante ermöglicht somit den Genuss des erfrischenden Getränks in heißen Sommermonaten.

Zur Intensivierung der Aromen wird zur Wasserdampfdestillation in einer ersten Brennblase einer Destillationsapparatur eine Flüssigkeit oder Suspension umfassend rückgeführtes Hydrolat, wässrige Wacholdermaische und/oder Wasser eingesetzt.

Somit kann nicht nur Wasser, sondern wasserhaltige Flüssigkeiten und Suspensionen mit Aromaträgern, z.B. als Maische, im vorliegenden Verfahren eingesetzt werden, um eine Intensivierung der Aromen gegenüber der Wasserdampfdestillation nur mit Wasser zu erreichen

Der gebildete Dampf wird in an sich bekannter Weise, wie aus allen Destillationsanlagen bekannt, in einem Dampfraum eingeleitet werden.

Typischerweise ist der Dampfraum direkt Teil der Brennblase und beginnt unmittelbar oberhalb der Flüssigkeit oder Suspension und erstreckt sich bis zu einem Kondensator in welchem der Dampf kondensiert.

Es sind allerdings auch Varianten denkbar, in welchem die Zuleitung an Dampf in den Dampfraum, als ersten Dampfraum, über ein Ventil zwischen der Brennblase und dem Dampfraum einleitbar ist.

Um den gebildeten Überdruck an Dampf in der Brennblase bei geschlossenem Ventil abzuleiten kann eine Zuleitung in einen weiteren Dampf- und/oder Kondensationsraum erfolgen, wo sich das Kondensat sammelt und ggf. erneut der Brennblase zugeführt werden kann.

In den Dampfraum, in welchen der in der Brennblase entwickelte Dampf einleitbar ist, sind Aromaträger zumindest in Form von Wacholderbeeren angeordnet. Typischerweise werden in der Getränkeherstellung Aromakörbchen genutzt in welche Wacholderbeeren und ggf. weitere Aromaträger z.B. sogenannte Botanicals oder ähnliches angeordnet sind.

Im Anschluss an die Wasserdampfdestillation wird zur Einstellung der Alkoholkonzentration des Hydrolats ein alkoholhaltiger Dampf zu den Aromaträgern geleitet.

Nachdem durch den Wasserdampf polare Inhaltsstoffe der Aromaträger gelöst werden, werden durch Einleitung des alkoholischen Dampfes nunmehr unpolarere Inhaltsstoffe im Dampf gelöst.

Im Ergebnis ergibt sich ein intensives Ginaroma und ein sehr effizientes Herauslösen von Inhaltsstoffen aus den Aromaträgern auch wenn der Alkoholgehalt gegenüber normalem Gin deutlich verringert ist.

In einem Auffangraum werden sodann die Kondensate der beiden Dämpfe gesammelt, wobei sich ein Hydrolat bildet, welches

Das Getränk ist dabei kohlensäurefrei, also mit einer Konzentration von weniger als 4 g/l CO₂, vorzugsweise weniger als 2 g/l CO₂. Dies erhöht die Einsatzmöglichkeiten als Komponente eines Mischgetränks in einer Bar.

Zusätzlich zu den Wacholderbeeren können weitere Pflanzenbestandteile, sogenannte weitere Botanicals, vorzugsweise Kräuter, Schalen von Zitrusfrüchten, Obstbestandteile und/oder Zapfen von Nadelbäumen, eingesetzt werden, deren Aromastoffe durch den Wasserdampf extrahiert werden.

Die Einstellung der Alkoholkonzentration kann nach der Wasserdampfdestillation durch direkte Zugabe von Alkohol zu dem erkalteten Hydrolat erfolgen. Dies ist insbesondere energie- und kostensparend.

Alternativ kann die Einstellung der Alkoholkonzentration durch Austausch von Wasser in einer Brennblase einer Destillationsapparatur gegen eine alkoholhaltige Flüssigkeit, z.B. reinen Alkohol oder eine vergorene Maische, erfolgen. Da die Botanicals des Gin, insbesondere die Wacholderbeeren, oberhalb der Flüssigkeit im sogenannten Brennhafen in einem Aromasieb angeordnet sind, können durch den alkoholischen Dampf noch weitere Aromastoffe aus den Wacholderbeeren oder den anderen Botanicals extrahiert werden.

Während der Wasserdampfdestillation gebildetes Hydrolat in die Brennblase, vorzugsweise kontinuierlich, rückgeführt werden bis hinreichend Inhaltsstoffe aus den Aromaträgern extrahiert wurden. Der Zeitraum der Rückführung kann sich aus Erfahrungswerten z.B. Farbe, Geruch oder ermittelter Zeitraum von vorhergehenden Destillationen ergeben und/oder aus Probeverkostungen des Hydrolats während der Destillation z.B. durch einen Brennmeister und/oder durch messtechnisches Erfassen chemischer Konzentrationen und Abgleich mit Grenzwerten.

Für ein großtechnisches und automatisiertes Verfahren kann während der Wasserdampfdestillation eine Ermittlung einer chemischen Konzentration, insbesondere des pH-Werts, des aktiven Sauerstoffgehalts und/oder des Stickstoffgehalts erfolgt und die Rückführung an Hydrolat und/oder der Zeitpunkt des Wechsels von der Wasserdampfdestillation zur alkoholischen Destillation durch Zufuhr an alkoholhaltiger Flüssigkeit in Abhängigkeit der ermittelten Konzentration erfolgen. Die ermittelten Messwerte können aus vielen Gründen verfälscht sein, daher empfiehlt es sich zunächst Vorversuche anzustellen, um den optimalen Grenzwert und die optimale Messgröße oder Messgrößen z.B. pH, Stickstoff, Farbe, usw. zu ermitteln

Zur weiteren Erhöhung des Gehalts an Aromastoffen kann als eingesetzte zu destillierende Flüssigkeit in der Brennblase ebenfalls ein Hydrolat oder ein Aufguss aus Inhaltsstoffen von Wacholderbeeren genutzt werden. Dieses als Ausgangsstoff eingesetzte Hydrolat kann insbesondere alkoholfrei sein.

Besonders bevorzugt kann das ginähnliche Hydrolat als Spirituose mit einer Alkoholkonzentration zwischen 15 bis 22 Vol. % eingesetzt wird. Die Formulierung "Spitituose" darf nach allgemeiner Konvention erst ab einem Alkoholgehalt von 15 Gew.% verwendbar werden.

Wie bereits erörtert sind die Aromaträger vorzugsweise in einem dampfdurchlässigen Aromakorb, z.B. einem Siebkorb, angeordnet. Eine Dampfzuleitung kann wahlweise mit in der ersten Brennblase erzeugtem Wasserdampf, ggf. bereits mit angereicherten Aroma-Inhaltsstoffen, erfolgen oder, insbesondere nach Beendigung der Wasserdampfdestillation, aus einer zweiten Brennblase umfassend eine alkoholhaltige Flüssigkeit, wobei die Dampfzuleitung durch ein Ventil gesteuert wird.

Überdruckableitungen aus beiden Brennblasen in einen Kondensations- und Auffangbehälter können optional vorgesehen sein.

Die Alkoholkonzentration kann vorzugsweise durch eine Dichtemessung ermittelt werden. Dichtesensoren sind an sich bekannt. Diese sind in neuerer Zeit auch als kostengünstige MEMS-Zellen einsetzbar. Die Steuerung des Ventils und/oder ein Ablassen des Produktes aus dem Auffangraum kann in Abhängigkeit von der ermittelten Alkoholkonzentration in vorteilhafter automatisierter Weise erfolgen.

In einer weiteren vorteilhaften Ausführungsvariante der Erfindung kann der Dampfraum oberhalb der Flüssigkeit oder Suspension innerhalb der ersten Brennblase angeordnet ist, wobei zur Einstellung der Alkoholkonzentration die Flüssigkeit oder Suspension gegen die alkoholhaltige Flüssigkeit ausgetauscht wird. Dieser eher klassische Ansatz ist bei einer small-batch-Variante bevorzugt, da der apparative Aufwand geringer ist.

Nachfolgend wird die Erfindung anhand eines Ausführungsbeispiels unter Verwendung der beigefügten Figuren näher erläutert. Weitere Vorteile, Merkmale und Einzelheiten der Erfindung ergeben sich aus der nachfolgenden Beschreibung, in der mehrere Ausführungsbeispiele der Erfindung anhand der beiliegenden Zeichnungen näher erläutert werden. Der Fachmann wird die in den Zeichnungen, der Beschreibung und den Ansprüchen in Kombination offenbarten Merkmale zweckmäßigerweise auch einzeln betrachten und zu sinnvollen weiteren Kombinationen zusammenfassen. Es zeigt:

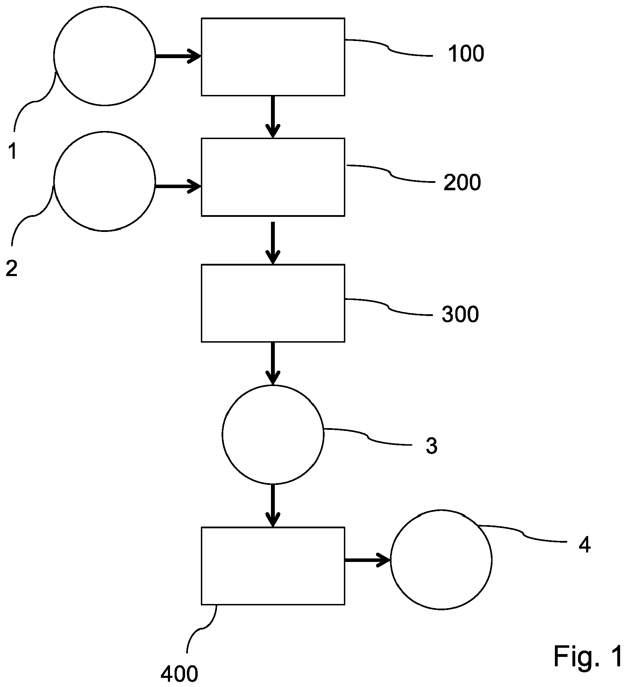

- Fig. 1: Ablaufschema zur Herstellung einer alkoholreduzierten Ginvariante.

Fig. 1 zeigt ein Verfahren zur Herstellung einer alkoholreduzierten Ginvariante. Basis für das Verfahren ist das sogenannte Pot-Still-Verfahren.

Aus dem Stand der Technik sind drei unterschiedliche Methoden zur Herstellung von Gin bekannt, die Mazeration, die Digestion und die Perkulation.

In den ersten beiden Verfahren werden sogenannte Botanicals, hier vorwiegend Wacholder in Kombination mit Kräutern, Schalen von Zitrusfrüchten oder anderen Aromastoffen zu vergleichsweise hochkonzentriertem Alkohol gegeben und wahlweise kalt gelagert oder als Heißauszug bei 70°C gekocht.

Bei der Perkulation wird Alkohol oder Maische destilliert. Über der Brennblase im sogenannten Brennhafen wird ein Aromasieb mit den Botanicals angeordnet. Dabei löst der alkoholische Dampf die Aromastoffe aus den Botanicals. Das Destillat weist somit neben Alkohol die Aromastoffe der Botanicals auf.

In Fig. 1 erfolgt in einem ersten Schritt 100 der Einsatz eines zu destillierenden Mediums 1. Dieses ist anders als im herkömmlichen Verfahren Wasser. Alternativ kann auch eine Maische aus Wasser und Wacholderbeeren genutzt werden, welche über mehrere Stunden oder Tage, vorzugsweise zumindest über 2h eingeweicht wurde.

Alternativ kann auch alkoholfreies Hydrolat als sogenannte Vorlage in der Brennblase eingesetzt werden. Eine besondere Variante umfasst die Rückführung von Hydrolat im Kreislauf während der Wasserdampfdestillation zur Anreicherung von Inhaltsstoffen.

Weiterhin erfolgt in einem zweiten Schritt 200 das Vorlegen von Botanicals 2 in einem Aromasieb oberhalb des zu destillierenden Mediums 1.

Die Botanicals können dabei zerkleinert, z.B. gemörsert oder gerieben, vorliegen, um eine bessere Extraktion von Aromastoffen zu ermöglichen.

In einem dritten Verfahrensschritt 300 erfolgt die Hydrolatbildung. Dabei wird das Wasser 1 verdampft und löst beim Durchtritt durch das Aromasieb zumindest einen Teil der Aromastoffe der Botanicals. Dadurch wird eine wässrige Lösung umfassend Aromastoffe, wie ätherische Öle und dergleichen erzeugt.

Es hat sich gezeigt, dass trotz der Varianz in der Polarität zwischen Wasserdampf und Alkoholdampf sich eine sehr große Menge an Aromastoffen im Destillat nach der Destillation des Wassers wiederfinden.

Es hat sich allerdings ebenfalls gezeigt, dass insbesondere eine der Hauptkomponenten des Gins, die Aromastoffe der Wacholderbeere, sich nach dieser thermischen Belastung innerhalb kurzer Zeit zersetzt. Daher ist das wässrige Destillat bzw. Hydrolat 3 mit den Aromastoffen nicht sehr lange stabil.

Hydrolate aus Wacholderbeeren, eigentlich Zapfen, sind u.a. mit ätherischen Ölen, wie Monoterpene, Monoterpenole, insbesondere Terpinen-4-ol, und Sesquiterpene angereichert.

Für ein langzeit-stabiles Produkt hat es sich überraschend gezeigt, dass ein Alkoholgehalt zwischen 10 bis 25% Alkohol (Volumenkonzentration reinen Alkohols bei 20°C) ausreicht, um eine hinreichende Stabilisierung über einen längeren Zeitraum zu ermöglichen. Besonders bevorzugt ist ein Alkoholgehalt zwischen 15 bis 22 Vol. %. Dieser wird in einem vierten Schritt 400 zu dem alkoholfreien Hydrolat 3 hinzugegeben, so dass ein alkoholhaltiges Hydrolat 4 als Produkt bereitgestellt wird.

Der Alkohol kann während der Dampfdestillation durch Wechsel der Befüllung der Brennblase zugegeben werden. Dadurch werden die Inhaltsstoffe aus dem Aromastoffen intensiver extrahiert. Es kann auch die Brennblase gewechselt werden oder aber Dampf aus einer zweiten Blase zum Aromakörbchen zugeleitet werden.

Die Zeitdauer der Kreislaufführung und der Wechsel von Wasser auf Alkohol kann durch messtechnisches Erfassen von chemischen Konzentrationen oder physikalischen Stoffeigenschaften messtechnisch erfasst werden.

In letzterem Fall wird ab einem bestimmten Zeitpunkt Alkohol statt Wasser genutzt, so dass aus den Botanicals im Aromasieb durch Änderung der Polarität weniger polare Inhaltsstoffe noch extrahiert werden können.

Wacholder-Hydrolate wurden bislang zu Rheuma-Einreibungen, zu Haarwaser und/oder als Hautpflegemittel weiterverarbeitet.

Die Verwendung eines alkoholstabilisierten gasfreien Hydrolats zur oralen Einnahme, insbesondere als Genussmittel, ist bislang nicht bekannt

Die Zusammenstellung und Mixtur erfolgt mit den Gin-ähnlichen Inhaltsstoffen, wobei Wacholderbeeren zumindest zu 20 Gew.% enthalten sind. Angewandt kann auch eine einmalige Dampfdestillation analog einem London-Dry-Gin-Verfahren genutzt werden allerdings unter Verwendung von Wasser.

Es ist auch möglich Verfahren zur Herstellung eines Gin-artigen Hydrolats, wobei in einem ersten Schritt ein erstes Hydrolat hergestellt wird, das in einem zweiten Schritt als Ausgangs-Flüssigkeit, wobei dabei eine zusätzliche Verdünnung möglich sein kann, für eine weitere Dampfdestillation für ein Hydrolat dient. Dieser Prozess kann mehrmals in separaten Schritten wiederholt werden.

Dies sorgt für eine weitergehende Konzentration der Aromen.

Durch die Diffusion von erst Wasserdampf und dann Alkohol durch das Körbchen absolute Konzentration und Verstärkung der Zutaten.

## Patentansprüche

1. Verwendung eines ginähnliches Hydrolats (4), hergestellt durch eine Wasserdampfdestillation von Wacholderbeeren, als Getränk in Form eines Genussmittels,
wobei das ginähnliche Hydrolat (4) eine Alkoholkonzentration von 10 bis 25 Vol.% an Alkohol aufweist,
wobei zur Wasserdampfdestillation in einer ersten Brennblase einer Destillationsapparatur eine Flüssigkeit oder Suspension umfassend rückgeführtes Hydrolat, wässrige Wacholdermaische und/oder Wasser eingesetzt wird,
wobei in einem Dampfraum in welchen der in der Brennblase entwickelte Dampf einleitbar ist Aromaträger zumindest in Form von Wacholderbeeren angeordnet sind,
wobei insbesondere im Anschluss an die Wasserdampfdestillation zur Einstellung der Alkoholkonzentration des Hydrolats ein alkoholhaltiger Dampf zu den Aromaträgern geleitet wird
und wobei in einem Auffangraum die Kondensate der beiden Dämpfe unter Ausbildung des Hydrolats gesammelt werden.

2. Verwendung nach Anspruch 1, **dadurch gekennzeichnet, dass** das ginähnliche Hydrolat (4) als Komponente eines Mischgetränks, vorzugsweise in Kombination mit einem chinin- und kohlensäurehaltigen Erfrischungsgetränk, insbesondere von Tonic Water, eingesetzt wird.

3. Verwendung nach Anspruch 1 oder 2, **dadurch gekennzeichnet, dass** das Hydrolat (4) weniger als 4 g/l CO₂, vorzugsweise weniger als 2 g/l CO₂, aufweist.

4. Verwendung nach Anspruch 1-3, **dadurch gekennzeichnet, dass** bei der Wasserdampfdestillation zusätzlich zu den Wacholderbeeren weitere Pflanzenbestandteile, sogenannte Botanicals (2), vorzugsweise Kräuter, Schalen von Zitrusfrüchten, Obstbestandteile und/oder Zapfen von Nadelbäumen, eingesetzt werden, deren Aromastoffe durch den Wasserdampf extrahiert werden.

5. Verwendung nach einem der vorhergehenden Ansprüche 1-4, **dadurch gekennzeichnet, dass** während der Wasserdampfdestillation gebildetes Hydrolat in die Brennblase, vorzugsweise kontinuierlich, rückgeführt wird.

6. Verwendung nach einem der vorhergehenden Ansprüche, **dadurch gekennzeichnet, dass** während der Wasserdampfdestillation eine Ermittlung einer chemischen Konzentration, insbesondere des pH-Werts, des aktiven Sauerstoffgehalts und/oder des Stickstoffgehalts und/oder einer physikalischen Stoffgröße, insbesondere der Färbung, erfolgt und die Rückführung an Hydrolat und/oder die Zufuhr an alkoholhaltiger Flüssigkeit in Abhängigkeit der ermittelten Konzentration erfolgt.

7. Verwendung nach einem der vorhergehenden Ansprüche, **dadurch gekennzeichnet, dass** als zu destillierende Flüssigkeit in der Brennblase ein Hydrolat, insbesondere ein alkoholfreies Hydrolat, oder ein Aufguss aus Inhaltsstoffen von Wacholderbeeren, und vorzugsweise weiteren Botanicals, genutzt wird.

8. Verwendung nach einem der vorhergehenden Ansprüche, **dadurch gekennzeichnet, dass** das ginähnliche Hydrolat (4) als Spirituose mit einer Alkoholkonzentration zwischen 15 bis 22 Vol. % eingesetzt wird.

9. Verwendung nach einem der vorhergehenden Ansprüche, **dadurch gekennzeichnet, dass** die Aromaträger in einem Aromakorb angeordnet ist und dass eine Dampfzuleitung wahlweise mit aus der ersten Brennblase umfassend die Flüssigkeit oder Suspension erfolgt oder aus einer zweiten Brennblase umfassend eine alkoholhaltige Flüssigkeit erfolgt, wobei die Dampfzuleitung durch ein Ventil gesteuert wird.

10. Verwendung nach Anspruch 8, **dadurch gekennzeichnet, dass** die Alkoholkonzentration, vorzugsweise durch eine Dichtemessung, ermittelt wird und die Steuerung des Ventils und/oder ein Ablassen des Produktes aus dem Auffangraum in Abhängigkeit von der ermittelten Alkoholkonzentration erfolgt.

11. Verwendung nach einem der vorhergehenden Ansprüche, **dadurch gekennzeichnet, dass** der Dampfraum oberhalb der Flüssigkeit oder Suspension innerhalb der ersten Brennblase angeordnet ist, wobei zur Einstellung der Alkoholkonzentration die Flüssigkeit oder Suspension gegen die alkoholhaltige Flüssigkeit ausgetauscht wird.

12. Verwendung nach einem der vorhergehenden Ansprüche, **dadurch gekennzeichnet, dass** die Aromaträger während beider der Wasserdampfdestillation und der alkoholischen Destillation nicht ausgewechselt werden.
